# EUROPÄISCHE PATENTSCHRIFT

(11) **EP 3 007 852 B1**
(45) Veröffentlichungstag und Bekanntmachung des Hinweises auf die Patenterteilung: **23.08.2017**
(21) Anmeldenummer: 14733988.1
(22) Anmeldetag: 05.06.2014
(51) Int. Cl.: B23K 26/16, B23K 26/38, B23K 26/14, B23K 26/12, B23K 26/386, B23K 26/382, B23K 26/384

(54) **VERFAHREN ZUM EINSTECHEN IN METALLISCHE WERKSTÜCKE MITTELS EINES LASERSTRAHLS**
METHOD FOR GROOVING IN METALLIC COMPONENTS USING A LASER BEAM
PROCÉDÉ DE RAINURAGE DANS DES COMPOSANTS MÉTALLIQUES EN UTILISANT UN FAISCEAU LASER

(30) Priorität: 11.06.2013 DE 102013210857
(43) Veröffentlichungstag der Anmeldung: 20.04.2016
(73) Patentinhaber: Trumpf Werkzeugmaschinen GmbH + Co. KG, 71254 Ditzingen (DE)
(72) Erfinder: RAICHLE, Florian, 70499 Stuttgart (DE)
(74) Vertreter: Kohler Schmid Möbus Patentanwälte
(86) Internationale Anmeldenummer: PCT/EP2014/001533
(87) Internationale Veröffentlichungsnummer: WO 2014/198395

(56) Entgegenhaltungen:
- JP-A- H0 557 469
- US-A1- 2013 026 144

## Beschreibung

Die Erfindung betrifft ein Verfahren zum Einstechen in ein metallisches Werkstück mittels eines Laserstrahls und eines Prozessgases.

Beim Laserschneiden entstehen beim Einstechen in dicke Werkstücke Aufwürfe aus geschmolzenem und wieder erstarrendem Metall oder Metalloxid in der Umgebung des Einstichlochs, deren Ausmaße mit größer werdender Blechstärke deutlich zunehmen. Diese Anhaftungen rund um das Einstichloch stören vor allem bei zu schneidenden Innengeometrien und bei kleinen Bauteilen, bei denen die Schneidkontur zwangsläufig sehr nah an der Einstichstelle entlang verläuft. Außerdem erkennt die Abstandssensorik des Laserbearbeitungskopfs die Aufwürfe als Störkontur und regelt die Bewegung des Laserbearbeitungskopfs weg vom Werkstück, was prozesstechnische Probleme zur Folge hat. Zur Vermeidung dieser Probleme ist es notwendig, die anhaftenden Aufwürfe auf dem Werkstück zu reduzieren oder zu vermeiden.

Aus der US-A-2013 026144 ist ein Laserverarbeitungsverfahren bekannt, umfassend einen ersten Schritt des Bestrahlens einer Oberfläche eines Werkstücks mit einem Laserstrahl mit einem Fokalpunkt, der von der Oberfläche beabstandet ist, und des Ausbildens eines Lochs mit Boden bei dem Werkstück, das mit einer röhrenförmigen Innenumfangsfläche, die sich bei der Oberfläche öffnet, und einer Bodenfläche definiert ist, und einen zweiten Schritt des Bestrahlens der Bodenfläche mit einem Laserstrahl, während ein Hilfsgas in eine Öffnung des Lochs mit Boden geblasen wird, nicht aber auf eine Fläche geblasen wird, die die Öffnung umgibt, und des Ausbildens eines Durchgangslochs, das das Werkstück durchdringt. Ein Laserverarbeitungssystem umfasst einen Verarbeitungskopf, der einen von einem Laserstrahl abgestrahlten Laserstrahl fokussiert, um ein Werkstück mit dem Laserstrahl zu bestrahlen, und der ein Hilfsgas auf das Werkstück bläst, und einen Steuerabschnitt, der den ersten und zweiten Schritt als einen Betrieb des Verarbeitungskopfs steuert.

Aus JP05057469A ist ein Einstechverfahren bekannt, bei dem in einem ersten Verfahrensschritt mit großem Abstand zwischen der Prozessgasdüse am Bearbeitungskopf und der Werkstückoberfläche eine breite, flache Mulde in der Oberfläche des Werkstücks erzeugt wird. Anschließend wird mit kleinerem Abstand zwischen der Düse und der Werkstückoberfläche, geringerer Laserleistung und geringerem Druck des Prozessgases ein durch das Werkstück hindurch reichendes Einstichloch erzeugt.

Aus DE102012014323A1 ist es bekannt, beim Einstechen in einem ersten Verfahrensschritt mit großem Abstand zwischen Prozessgasdüse und Werkstückoberfläche ein zylinderförmiges, breites Loch in der oberen Werkstückhälfte zu erzeugen. Anschließend wird in einem zweiten Verfahrensschritt der Laserstrahl auf die Bodenfläche des breiten Lochs fokussiert, um ein Durchstichloch zu erzeugen. Bei diesem zweiten Schritt wird das Prozessgas nur in das breite Loch und nicht auf die Umgebung des Lochs gerichtet.

Der vorliegenden Erfindung stellt sich die Aufgabe, das aus JP05057469A bekannte Verfahren dahingehend zu verbessern, dass ein schnelleres Einstechen und ein geringerer Wärmeeintrag beim Einstechen in das Werkstück ermöglicht werden. Ein reduzierter Wärmeeintrag beim Einstechen ist besonders vorteilhaft für einen fehlerfreien Konturschnitt in der Umgebung der Einstichstelle.

Diese Aufgabe wird erfindungsgemäß gelöst durch ein Verfahren zum Einstechen in ein metallisches Werkstück mittels eines Laserstrahls und eines Prozessgases, mit folgenden Schritten:
a) Ausbilden eines nicht durchgehenden Einstichlochs im Werkstück durch Einstechen des Laserstrahls in das Werkstück mit einem Inertgas, insbesondere Stickstoff, als Prozessgas;
b) Verbreitern des oberen Teils des Einstichlochs zu einer das Einstichloch auf der Werkstückoberseite, insbesondere konzentrisch, umgebenden Mulde mittels des auf dem Werkstück auf einen größeren Strahldurchmesser als im Schritt a) eingestellten Laserstrahls und mit Sauerstoff als Prozessgas; und
c) Durchstechen des Einstichlochs mittels des Laserstrahls und mit Sauerstoff als Prozessgas.

Beim erfindungsgemäßen Verfahren erfolgt in den beiden Schritten a) und b) an der Werkstückoberseite die Formung eines trichterförmigen Teileinstichs (Einstichtrichter), der den Austrieb der Schmelze erleichtert. Im Schritt c) erfolgt anschließend der Durchstich bis zur Blechunterseite, wobei der Laserstrahl durch den zuvor geformten Einstichtrichter besonders gut in der Tiefe des Materials wirkt, was zu einem schnellen Prozessfortschritt führt.

Im ersten Verfahrensschritt a) des erfindungsgemäßen Einstechverfahrens wird mit gepulster oder kontinuierlicher Laserstrahlung und mit einem Inertgas, vorzugsweise mit Stickstoff, in das Werkstück eingestochen und ein Einstichloch geformt, das nicht durch die gesamte Werkstückdicke hindurch reicht. Vorteilhafterweise erstreckt sich das Einstichloch nur bis in die obere Hälfte des Werkstücks hinein. Durch die Verwendung eines Inertgases als Prozessgas erfolgt kein unkontrollierter Abbrand des Werkstückmaterials. Außerdem wird der Energieeintrag in das Werkstück gering gehalten, was sich beim späteren Schneiden der Kontur positiv auf die Bearbeitungsgenauigkeit auswirkt.

Das beim Einstechen aufschmelzende Werkstückmaterial lagert sich um das Einstichloch herum ab und bildet einen Aufwurf. In dem darauf folgenden zweiten Verfahrensschritt b) des erfindungsgemäßen Einstechverfahrens wird der obere Teil des Einstichlochs dadurch verbreitert, dass mit größerem Strahldurchmesser des Laserstrahls auf dem Werkstück als beim Schritt a) und mit Sauerstoff als Prozessgas mit gepulster oder kontinuierlicher Laserstrahlung eine Mulde in der Werkstückoberseite, vorzugsweise konzentrisch zum Einstichloch, erzeugt wird.

Bei diesem zweiten Verfahrensschritt b) wird der Aufwurf aus dem ersten Schritt zusammen mit weiterem Material aus der Werkstückoberfläche durch den Sauerstoff oxidiert und die dabei gebildete oxidische Schlacke durch den Prozessgasstrom abgeblasen. Es bildet sich eine flache Mulde, von deren Bodenfläche aus sich das im ersten Schritt a) erzeugte Einstichloch weiter in das Werkstückinnere hinein erstreckt. Die Mulde erstreckt sich also nur einen Bruchteil so weit in das Werkstück hinein wie das Einstichloch. Insgesamt bildet sich auf diese Weise ein trichterförmiges Loch in der Werkstückoberseite. Die erfindungsgemäße zweistufige Ausbildung des Einstichtrichters hat den Vorteil, dass sich auf der Werkstückoberfläche um dieses Loch herum kein anhaftendes Werkstückmaterial mehr befindet und nur ein Minimum an Wärmeeintrag in das Werkstück erfolgt. Es entsteht ein Einstichtrichter mit scharf begrenztem Rand und sauberer Umgebung.

Vorzugsweise liegt der Fokuspunkt des Laserstrahls beim ersten Verfahrensschritt a) oberhalb der Werkstückoberfläche, so dass ein relativ breites Einstichloch als späterer "Schaft" des Einstichtrichters entsteht. Besonders bevorzugt ist der Fokuspunkt des Laserstrahls im zweiten Verfahrensschritt b) noch weiter oberhalb der Werkstückoberfläche angeordnet und zusätzlich der Durchmesser des Laserstrahls im Fokus, d.h. der Fokusdurchmesser, größer als im ersten Verfahrensschritt a). Dadurch wird die Leistungsdichte des Laserstrahls auf der Werkstückoberfläche verringert und der Bestrahldurchmesser auf dem Werkstück vergrößert, so dass bei der Bestrahlung des Werkstücks eine flache Mulde mit großem Durchmesser in der Werkstückoberfläche gebildet wird.

Die Verschiebung des Laser-Fokuspunkts in vertikaler Richtung kann beispielsweise durch Verschieben einer oder mehrerer Linsen der Fokussieroptik im Bearbeitungskopf oder durch adaptive Spiegel in einer Freistrahloptik erfolgen. Bei fasergeführter Laserstrahlung kann die Vergrößerung des Fokusdurchmessers beispielsweise durch ein Schalten zwischen einem Faserkern und einem Fasermantel in einer Doppelcladfaser zwischen dem Laser und dem Bearbeitungskopf realisiert werden, wie es in der DE102010003750A1 beschrieben ist.

Vorzugsweise wird zumindest ergänzend auch der Abstand des Bearbeitungskopfs zur Werkstückoberfläche, d.h. der Abstand zwischen der Prozessgasdüse und der Werkstückoberfläche, geändert. Bereits beim ersten Verfahrensschritt a) sollte ein verhältnismäßig großer Abstand zwischen der Prozessgasdüse und der Werkstückoberfläche (von z.B. ca. 20 mm) eingestellt werden, so dass eine Verschmutzung der Prozessgasdüse durch geschmolzenes Metall vermieden wird. Im zweiten Verfahrensschritt b) wird vorzugsweise der Abstand zwischen der Prozessgasdüse und der Werkstückoberfläche noch weiter vergrößert (z.B. auf ca. 80 mm), so dass die Bestrahlfläche auf der Werkstückoberfläche vergrößert ist.

Das Durchstechen des Einstichlochs bis zur Unterseite des Werkstücks erfolgt im dritten Verfahrensschritt c), bei dem der Laserstrahl mittig über dem Einstichloch positioniert und mit Sauerstoff als Prozessgas und gepulster oder kontinuierlicher Laserstrahlung vom Boden des Einstichtrichters ausgehend durch das Werkstück durchgestochen wird, wobei der Fokuspunkt des Laserstrahls durch den trichterförmigen Voreinstich tiefer als der Trichterboden im Werkstück liegen kann. Dies hat entscheidende Vorteile für den effizienten Energieeintrag beim Durchstechen, da der Laserstrahl ohne Abschattungen tief im Material fokussiert werden kann.

Zusätzlich hat sich gezeigt, dass die in den Verfahrensschritten a) und b) erzeugte trichterförmige Kontur des Einstichlochs besonders gut in der Lage ist, die beim weiteren Einstechen (Durchstechen) erzeugte Schlacke weit vom Einstichloch weg zu fördern. Dadurch kühlt die Schmelze ab, bevor sie wieder auf die Werkstückoberfläche trifft, und haftet nicht auf der Werkstückoberfläche an.

Das erfindungsgemäße Verfahren kann sowohl an einer Festkörperlaser-Schneidmaschine als auch an einer Laserschneidmaschine mit CO₂-Laser umgesetzt werden und ist besonders beim Einstechen in plattenförmige Werkstücke aus Baustahl vorteilhaft.

Vorzugsweise ist der Abstand zwischen der Prozessgasdüse und der Werkstückoberfläche beim Durchstechen kleiner (z.B. ca. 5 mm) als bei den beiden Verfahrensschritten a) und b), so dass das Prozessgas gut in das Einstichloch eingekoppelt werden kann. Das Durchstechen kann entweder ungeregelt mit kontinuierlich ansteigender Laserleistung oder mit Hilfe einer bekannten Einstichsensorik geregelt erfolgen. Das im ersten Verfahrensschritt a) erzeugte Einstichloch am Boden der im zweiten Schritt erzeugten Mulde dient in diesem dritten Verfahrensschritt c) als Lichtkanal für den Laserstrahl. Auf diese Weise gelangt die Laserstrahlung besser in das Werkstück, und es wird eine bessere Tiefenwirkung der Laserstrahlung erreicht. Das Durchstichloch hat daher einen deutlich geringeren Durchmesser, und es findet ein geringerer weniger Wärmeeintrag in das Bauteil statt als bei bisher üblichen Einstichverfahren. Auf diese Weise wird weniger Schlacke gebildet, die sich auf dem Werkstück ablagern könnte, und ein fehlerfreier Konturschnitt in der Umgebung der Einstechstelle wird ermöglicht.

Die drei Verfahrensschritte a) bis c) können diskret aufeinanderfolgend durchgeführt werden. Dabei wird nach Beendigung des ersten Verfahrensschritts a) der Laserstrahl ausgeschaltet und der Bearbeitungskopf vertikal vom Werkstück nach oben weg verfahren. Dabei oder danach wird das Prozessgas von Stickstoff auf Sauerstoff umgestellt. Anschließend wird der Laserstrahl gezündet und der zweite Verfahrensschritt b) durchgeführt. Die Positionierbewegung des Bearbeitungskopfes zwischen dem zweiten und dritten Verfahrensschritt b), c) erfolgt ebenfalls bei ausgeschaltetem Laserstrahl. Alternativ können die drei Verfahrensschritte a) bis c) kontinuierlich aufeinander folgen, wobei der Laserstrahl angeschaltet bleibt. Die Änderung des Strahldurchmessers auf der Werkstückoberfläche erfolgt beispielsweise durch Verfahren des Bearbeitungskopfes senkrecht zur Werkstückoberfläche. Der Gaswechsel zwischen dem ersten und zweiten Verfahrensschritt a), b) wird beim Verfahren des Bearbeitungskopfes durchgeführt.

Nach dem Durchstich durch das Werkstück kann in einem optionalen vierten Verfahrensschritt d) das Einstichloch vor Beginn des eigentlichen Schneidprozesses vergrößert werden. Dies ist notwendig, wenn der Fokusdurchmesser des Laserstrahls beim Schneiden des Werkstücks größer ist als beim Einstechen. Dann wird beim Schneiden eine breite Schnittfuge erzeugt, wobei viel Schmelze gebildet wird. Ist das Einstichloch zu schmal, so kann die gebildete Schmelze zu Beginn des Schnitts nicht schnell genug durch das Einstichloch nach unten aus dem Werkstück ausgetrieben werden, und es kann zu einem Schnittabriss kommen.

Zum Vergrößern des Einstichlochs wird die Einstichstelle im vierten Verfahrensschritt d) mit dem auf einen größeren Fokusdurchmesser als beim dritten Verfahrensschritt c) eingestellten Laserstrahl bestrahlt. Der Gasdruck des Prozessgases ist so hoch eingestellt, dass die gebildete Schmelze sicher nach unten aus dem Werkstück ausgetrieben wird. Der Fokuspunkt des Laserstrahls ist ebenso wie beim dritten Verfahrensschritt c) unterhalb der Werkstückoberfläche angeordnet. Der Abstand zwischen Prozessgasdüse und Werkstückoberfläche entspricht dem Abstand im dritten Verfahrensschritt c). Vorzugsweise wird der Fokusdurchmesser des Laserstrahls beim Aufweiten des Durchstichlochs schrittweise oder kontinuierlich erhöht. Diese Durchmesservergrößerung kann beispielsweise durch Verschieben der Linsen im Bearbeitungskopf erfolgen, wie es in WO2011131541A1 beschrieben ist. Alternativ oder ergänzend kann bei fasergeführtem Laserstrahl ein Umschalten des Strahlwegs zwischen dem Kern und dem Mantel einer Doppelclad-Faser erfolgen, wie es in DE102010003750A1 beschrieben ist. Ein kontinuierliches Vergrößern des Fokusdurchmessers bis zum Durchmesser für den anschließenden Schneidprozess erhöht in besonderer Weise die Prozesssicherheit beim Vergrößern des Durchstichlochs.

Vorzugsweise wird vor dem Schritt a) die Werkstückoberseite an der Einstichstelle eingeölt, z.B. mit Öl eingesprüht, um die Anhaftung von in Schritt a) und Schritt b) eventuell gebildeten Spritzern zu verringern.

Die Erfindung betrifft in einem weiteren Aspekt auch eine Laserbearbeitungsmaschine umfassend einen Laserstrahlerzeuger, einen verfahrbaren Laserbearbeitungskopf mit einer Prozessgasdüse, aus der der Laserstrahl zusammen mit dem Prozessgas austritt, eine Einrichtung zum Auswählen des Prozessgases und eine Steuerung, die programmiert ist, die Bewegung des Laserbearbeitungskopfes und das ausgewählte Prozessgas der Einrichtung gemäß dem erfindungsgemäßen Einstechverfahren zu steuern.

Die Erfindung betrifft weiterhin auch ein Computerprogrammprodukt, welches Codemittel aufweist, die zum Durchführen aller Schritte des erfindungsgemäßen Einstechverfahrens angepasst sind, wenn das Programm auf einer Steuerung einer Laserbearbeitungsmaschine abläuft.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen des erfindungsgemäßen Einstechverfahrens geeignete Laserschneidmaschine;
- Fign. 2a-2d: die einzelnen Verfahrensschritte des erfindungsgemäßen Einstechverfahrens;
- Fign. 3a, 3b: jeweils ein Foto der Werkstückoberseite mit einem Durchstichloch, das nach einem herkömmlichen Einstichverfahren (Fig. 3a) und nach dem erfindungsgemäßen Einstichverfahren (Fig. 3b) hergestellt wurde; und
- Fign. 4a, 4b: jeweils ein Querschnittsfoto eines Durchstichlochs, das nach einem herkömmlichen Einstichverfahren (Fig. 4a) und nach dem erfindungsgemäßen Einstichverfahren (Fig. 4b) hergestellt wurde.

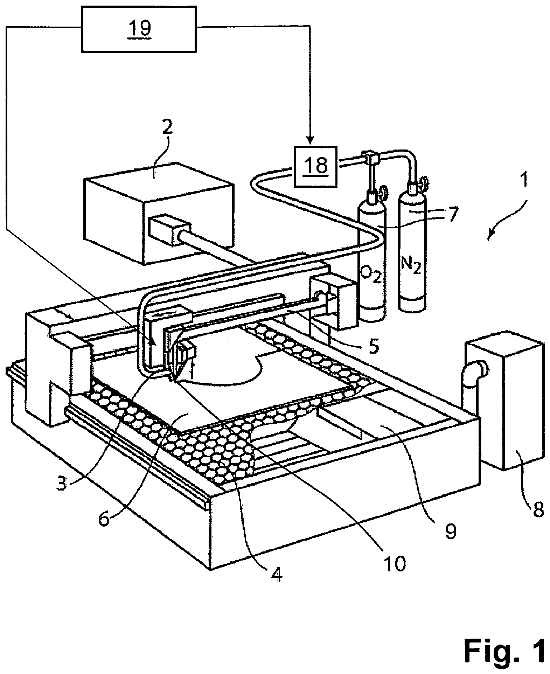

In **Fig. 1** ist perspektivisch eine Bearbeitungsmaschine **1** dargestellt, welche den Aufbau einer Laserschneidmaschine als Ausführungsbeispiel einer Laserbearbeitungsmaschine zeigt. Weitere Ausführungsbeispiele sind zum Beispiel eine Laserschweißmaschine oder eine kombinierte Stanz-/Laserschneidmaschine. Diese Bearbeitungsmaschine 10 weist beispielsweise einen CO₂-Laser, Diodenlaser oder Festkörperlaser als Laserstrahlerzeuger **2,** einen verfahrbaren Laserbearbeitungskopf **3** und eine Werkstückauflage **4** auf. Im Laser 2 wird ein Laserstrahl **5** erzeugt, der mittels eines (nicht gezeigten) Lichtleitkabels oder (nicht gezeigten) Umlenkspiegeln vom Laser 2 zum Bearbeitungskopf 3 geführt wird. Auf der Werkstückauflage **4** ist ein Werkstück **6** angeordnet. Der Laserstrahl 5 wird mittels einer im Bearbeitungskopf 3 angeordneten Fokussieroptik auf das Werkstück 6 gerichtet. Die Bearbeitungsmaschine 1 wird darüber hinaus mit Prozessgasen **7,** beispielsweise Sauerstoff und Stickstoff, versorgt. Es können alternativ oder zusätzlich auch Druckluft oder anwendungsspezifische Gase vorgesehen sein. Die Verwendung der einzelnen Gase ist von dem Material des zu bearbeitenden Werkstücks 6 und von Qualitätsanforderungen an die Schnittkanten abhängig. Weiterhin ist eine Absaugeinrichtung **8** vorhanden, die mit einem Absaugkanal **9,** der sich unter der Werkstückauflage 4 befindet, verbunden ist. Das Prozessgas 7 wird einer Prozessgasdüse **10** des Bearbeitungskopfes 3 zugeführt, aus der es zusammen mit dem Laserstrahl 5 austritt.

Beim Schneiden des Werkstücks 6 unter Verwendung von Sauerstoff als Prozessgas wird das Material des Werkstücks 6 geschmolzen und größtenteils oxidiert. Bei der Verwendung von Inertgasen, wie zum Beispiel Stickstoff oder Argon, wird das Material lediglich geschmolzen. Die entstandenen Schmelzpartikel werden dann, gegebenenfalls zusammen mit den Eisenoxiden, ausgeblasen und zusammen mit dem Schneidgas über die Absaugkanal 9 durch die Absaugeinrichtung 8 abgesaugt.

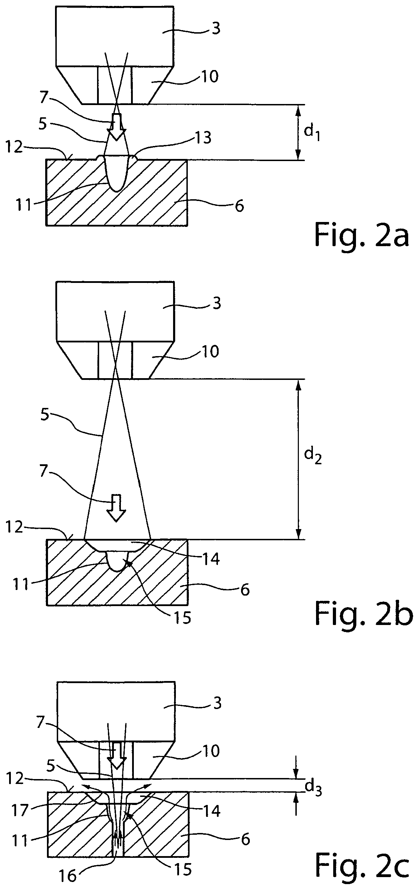

In Fign. 2a bis 2d sind die einzelnen Verfahrensschritte des erfindungsgemäßen Einstechverfahrens in ein Werkstück 6 aus Stahl gezeigt.

In dem in **Fig. 2a** gezeigten ersten Verfahrensschritt a) wird mittels des gepulsten oder kontinuierlichen Laserstrahls 5 und mit Stickstoff als Prozessgas 7 in das Werkstück 6 eingestochen und ein Einstichloch **11** geformt, das nicht durch die gesamte Werkstückdicke durchgeht. Vorteilhafterweise erstreckt sich das Einstichloch 11 nur bis in die obere Hälfte des Werkstücks 6 hinein. Durch die Verwendung von Stickstoff als Prozessgas 7 erfolgt kein unkontrollierter Abbrand des Werkstückmaterials. Außerdem wird der Energieeintrag in das Werkstück 6 gering gehalten, was sich beim späteren Schneiden der Kontur positiv auf die Bearbeitungsgenauigkeit auswirkt.

Das beim Einstechen aufschmelzende Werkstückmaterial lagert sich um das Einstichloch 11 herum ab und bildet auf der Werkstückoberseite **12** einen Aufwurf **13.**

In dem darauf folgenden, in **Fig. 2b** gezeigten zweiten Verfahrensschritt b) wird der obere Teil des Einstichlochs 11 dadurch verbreitert, dass mittels des nun auf einen größeren Strahldurchmesser auf dem Werkstück 6 als beim Schritt a) eingestellten Laserstrahls 5 und mit Sauerstoff als Prozessgas 7 mit gepulster oder kontinuierlicher Laserstrahlung eine Mulde **14** in der Werkstückoberseite 12 konzentrisch zum Einstichloch 11 erzeugt wird.

Bei diesem zweiten Verfahrensschritt b) wird der Aufwurf 13 aus dem ersten Schritt a) zusammen mit weiterem Material aus der Werkstückoberfläche durch den Sauerstoff oxidiert und die dabei gebildete oxidische Schlacke durch den aus der Prozessgasdüse 10 austretenden Prozessgasstrom abgeblasen. Es bildet sich eine flache Mulde 14, von deren Bodenfläche aus sich das im ersten Schritt a) erzeugte Einstichloch 11 weiter in das Werkstückinnere hinein erstreckt. Die Mulde 14 erstreckt sich also nur einen Bruchteil so weit in das Werkstück 6 hinein wie das Einstichloch 11. Insgesamt bildet sich auf diese Weise ein trichterförmiger Teileinstich (Einstichtrichter) **15** mit scharf begrenztem Rand und sauberer Umgebung in der Werkstückoberseite 12. Die zweistufige Ausbildung des Einstichtrichters 15 hat den Vorteil, dass sich auf der Werkstückoberseite 12 um diesen Einstichtrichter 15 herum kein anhaftendes Werkstückmaterial mehr befindet und nur ein Minimum an Wärmeeintrag in das Werkstück 6 erfolgt. Außerdem erleichtert der Einstichtrichter 15 den Austrieb der Schmelze beim weiteren Durchstechen durch das Werkstück 6.

Vorzugsweise liegt der Fokuspunkt des Laserstrahls 5 beim ersten Verfahrensschritt a) oberhalb der Werkstückoberseite 12, so dass ein relativ breites Einstichloch 11 als späterer "Schaft" des Einstichtrichters 15 entsteht. Besonders bevorzugt ist der Fokuspunkt des Laserstrahls 5 im zweiten Verfahrensschritt b) noch weiter oberhalb der Werkstückoberseite 12 angeordnet und zusätzlich der Durchmesser des Laserstrahls 5 im Fokus, d.h. der Fokusdurchmesser, größer als im ersten Verfahrensschritt a). Dadurch wird die Leistungsdichte des Laserstrahls 5 auf der Werkstückoberseite 12 verringert und der Bestrahldurchmesser auf dem Werkstück 6 vergrößert, so dass bei der Bestrahlung des Werkstücks 6 eine flache Mulde 14 mit großem Durchmesser in der Werkstückoberseite 12 gebildet wird.

Bereits beim ersten Verfahrensschritt a) sollte ein verhältnismäßig großer Abstand **d1** zwischen Prozessgasdüse 10 und Werkstückoberseite 12 von z.B. ca. 20 mm eingestellt werden, so dass eine Verschmutzung der Prozessgasdüse 10 durch geschmolzenes Metall vermieden wird. Im zweiten Verfahrensschritt b) wird dann der Abstand **d2** zwischen Prozessgasdüse 10 und Werkstückoberseite 12 noch weiter vergrößert (d2>d1), z.B. auf ca. 80 mm, so dass die Bestrahlfläche auf der Werkstückoberseite 12 vergrößert ist.

Das Durchstechen des Einstichlochs 11 bis zur Unterseite des Werkstücks 6 erfolgt in dem in **Fig. 2c** gezeigten dritten Verfahrensschritt c), bei dem der Laserstrahl 5 mittig über dem Einstichloch 11 positioniert und mit Sauerstoff als Prozessgas 7 und gepulster oder kontinuierlicher Laserstrahlung vom Boden des Einstichtrichters 15 ausgehend durch das Werkstück 6 durchgestochen wird, wobei der Fokuspunkt des Laserstrahls 5 wegen des zuvor geformten Einstichtrichters 15 tiefer als der Trichterboden im Werkstück 6 liegen kann. Dies hat entscheidende Vorteile für den effizienten Energieeintrag beim Durchstechen, da der Laserstrahl 5 ohne Abschattungen tief im Material fokussiert werden kann, was zu einem schnellen Prozessfortschritt führt.

Zusätzlich hat sich gezeigt, dass der in den Verfahrensschritten a) und b) erzeugte Einstichtrichter 15 besonders gut in der Lage ist, die beim weiteren Einstechen (Durchstechen) in Verfahrensschritt c) erzeugte Schlacke weit vom Einstichloch 11 weg zu fördern, wie durch die Pfeile **17** in Fig. 2c angedeutet ist. Dadurch kühlt die Schmelze ab, bevor sie wieder auf die Werkstückoberfläche trifft, und haftet nicht auf der Werkstückoberseite 12 an.

Vorzugsweise ist der Abstand **d3** zwischen der Prozessgasdüse 10 und der Werkstückoberseite beim Durchstechen kleiner (z.B. ca. 5 mm) als der Abstand d1, d2 bei den beiden Verfahrensschritten a) und b), so dass das Prozessgas gut in das Einstichloch 11 eingekoppelt werden kann (d3<d1,d2). Der Druck des Prozessgases kann dann niedriger eingestellt werden als bei den Verfahrensschritten a) und b). Das Durchstechen kann entweder ungeregelt mit kontinuierlich ansteigender Laserleistung oder mit Hilfe einer bekannten Einstichsensorik geregelt erfolgen.

Das im ersten Verfahrensschritt a) erzeugte Einstichloch 11 am Boden der im zweiten Verfahrensschritt b) erzeugten Mulde 14 dient in diesem dritten Verfahrensschritt c) als Lichtkanal für den Laserstrahl 5. Auf diese Weise gelangt die Laserstrahlung besser in das Werkstück, und es wird eine bessere Tiefenwirkung der Laserstrahlung erreicht. Das Durchstichloch **16** hat daher einen deutlich geringeren Durchmesser als das ursprüngliche Einstichloch 11, und es findet ein geringerer Wärmeeintrag in das Werkstück 12 statt als bei bisher üblichen Einstichverfahren.

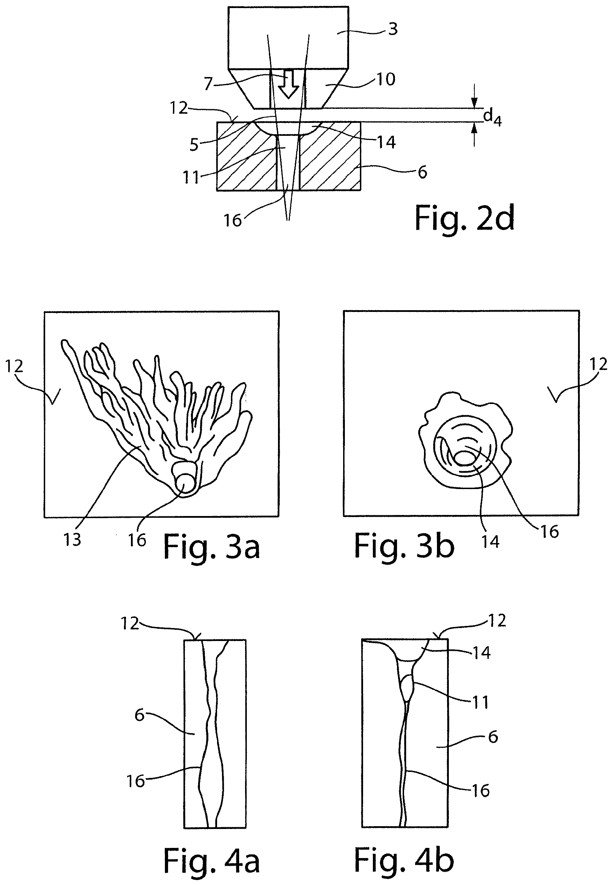

**Fig. 3a** zeigt ein Foto der Werkstückoberseite 12 mit einem Durchstichloch 16, das nach einem herkömmlichen Einstichverfahren hergestellt wurde, und **Fig. 3b** ein Foto der Werkstückoberseite 12 mit einem Durchstichloch 16, das nach dem erfindungsgemäßen Einstichverfahren hergestellt wurde. Während die in Fig. 3a gezeigte Werkstückoberseite 12 um das Durchstichloch 16 herum mit Schlackeaufwurf 13 verschmutzt ist, ist auf der in Fig. 3b gezeigten Werkstückoberseite 12 deutlich weniger Schlacke ablagert, wodurch ein fehlerfreier Konturschnitt in der Umgebung des Durchstichlochs 16 ermöglicht wird.

**Fig. 4a** zeigt ein Querschnittsfoto eines Durchstichlochs 16, das nach einem herkömmlichen Einstichverfahren hergestellt wurde, und **Fig. 4b** ein Querschnittsfoto eines Durchstichlochs 16, das nach dem erfindungsgemäßen Einstichverfahren hergestellt wurde. Während das in Fig. 4a gezeigte Durchstichloch 16 über die Werkstückdicke einen unregelmäßigen, breiten Lochdurchmesser aufweist, ist der Lochdurchmesser des in Fig. 4b gezeigten Durchstichloch 16 über die Werkstückdicke regelmäßiger, schmaler und nur an der Werkstückoberseite aufgrund des Einstichtrichters 15 kontrolliert verbreitert.

Nach dem Durchstich durch das Werkstück 6 kann, wie in **Fig. 2d** gezeigt, in einem optionalen vierten Verfahrensschritt d) das Durchstichloch 16 vor Beginn des eigentlichen Schneidprozesses vergrößert werden. Dies ist notwendig, wenn der Fokusdurchmesser des Laserstrahls 5 beim Schneiden des Werkstücks 6 größer ist als beim Einstechen. Dann wird beim Schneiden eine breite Schnittfuge erzeugt, wobei viel Schmelze gebildet wird. Ist das Durchstichloch 16 zu schmal, so kann die gebildete Schmelze zu Beginn des Schnitts nicht schnell genug durch das Durchstichloch 16 nach unten aus dem Werkstück 6 ausgetrieben werden, und es kann zu einem Schnittabriss kommen.

Zum Vergrößern des Durchstichlochs 16 wird die Einstichstelle im vierten Verfahrensschritt d) mit dem auf einen größeren Fokusdurchmesser als beim dritten Verfahrensschritt c) eingestellten Laserstrahl 5 bestrahlt. Der Gasdruck des Prozessgases 7 ist so hoch eingestellt, dass die gebildete Schmelze sicher nach unten aus dem Werkstück 6 ausgetrieben wird. Der Fokuspunkt des Laserstrahls 5 ist wie im dritten Verfahrensschritt c) unterhalb der Werkstückoberseite angeordnet. Der Abstand **d4** zwischen Prozessgasdüse 10 und Werkstückoberseite 12 entspricht dem Abstand d3 im dritten Verfahrensschritt c), also d4=d3.

Wie in Fig. 1 gezeigt, umfasst die Laserbearbeitungsmaschine 1 ferner eine Einrichtung (z.B. ein Umschaltventil) **18** zum Auswählen des der Prozessgasdüse 10 zugeführten Prozessgases und eine Steuerung **19,** die programmiert ist, die Verfahrbewegung des Laserbearbeitungskopfes 3 samt seiner Prozessgasdüse 10 sowie das ausgewählte Prozessgas 7 der Einrichtung 18 gemäß dem oben beschriebenen Einstechverfahren zu steuern.

## Patentansprüche

1. Verfahren zum Einstechen in ein metallisches Werkstück (6) mittels eines Laserstrahls (5) und eines Prozessgases (7), mit folgenden Schritten:
a) Ausbilden eines nicht durchgehenden Einstichlochs (11) im Werkstück (6) durch Einstechen des Laserstrahls (5) in das Werkstück (6) mit einem Inertgas, insbesondere Stickstoff, als Prozessgas (7);
b) Verbreitern des oberen Teils des Einstichlochs (11) zu einer das Einstichloch (11) auf der Werkstückoberseite (12), insbesondere konzentrisch, umgebenden Mulde (14) mittels des auf dem Werkstück (6) auf einen größeren Strahldurchmesser als im Schritt a) eingestellten Laserstrahls (5) und mit Sauerstoff als Prozessgas (7); und
c) Durchstechen des Einstichlochs (11) mittels des Laserstrahls (5) und mit Sauerstoff als Prozessgas (7).

2. Verfahren nach Anspruch 1, **dadurch gekennzeichnet, dass** der Fokuspunkt des Laserstrahls (5) im Schritt a) oberhalb der Werkstückoberseite (12) liegt.

3. Verfahren nach Anspruch 1 oder 2, **dadurch gekennzeichnet, dass** der Fokuspunkt des Laserstrahls (5) im Schritt b) weiter oberhalb der Werkstückoberseite (12) angeordnet ist als im Schritt a).

4. Verfahren nach einem der vorhergehenden Ansprüche, **dadurch gekennzeichnet, dass** der Fokuspunkt im Schritt c) unter der Werkstückoberseite (12) angeordnet ist.

5. Verfahren nach einem der vorhergehenden Ansprüche, **dadurch gekennzeichnet, dass** der Fokusdurchmesser des Laserstrahls (5) im Schritt b) größer ist als im Schritt a).

6. Verfahren nach einem der vorhergehenden Ansprüche, **dadurch gekennzeichnet, dass** der Abstand (d2) einer Prozessgasdüse (10), aus der das Prozessgas (7) austritt, von der Werkstückoberseite (12) im Schritt b) größer ist als der Abstand (d1) im Schritt a).

7. Verfahren nach einem der vorhergehenden Ansprüche, **dadurch gekennzeichnet, dass** der Abstand (d3) einer Prozessgasdüse (10), aus der das Prozessgas (7) austritt, von der Werkstückoberseite (12) im Schritt c) kleiner ist als der Abstand (d1, d2) im Schritt a) und/oder b).

8. Verfahren nach einem der vorhergehenden Ansprüche, **dadurch gekennzeichnet, dass** beim Schritt c) der Druck des Prozessgases (7) kleiner ist als beim Schritt a) und Schritt b).

9. Verfahren nach einem der vorhergehenden Ansprüche, **dadurch gekennzeichnet, dass** die Schritte a) bis c) direkt aufeinander folgen, der Laserstrahl (5) kontinuierlich angeschaltet bleibt und die Änderung des Strahldurchmessers auf der Werkstückoberseite (12) durch Verfahren des Bearbeitungskopfes (3) senkrecht zur Werkstückoberseite (12) erfolgt, wobei der Wechsel des Prozessgases (7) zwischen Schritt a) und b) beim Verfahren des Bearbeitungskopfes (3) erfolgt.

10. Verfahren nach einem der vorhergehenden Ansprüche, **dadurch gekennzeichnet, dass** in einem weiteren Schritt d) der Durchmesser des Einstichlochs (11) durch Bestrahlen mit dem auf einen größeren Fokusdurchmesser als im Schritt c) eingestellten Laserstrahl (5) vergrößert wird.

11. Verfahren nach Anspruch 10, **dadurch gekennzeichnet, dass** der Fokusdurchmesser des Laserstrahls (5) mehrfach schrittweise vergrößert wird.

12. Verfahren nach Anspruch 10, **dadurch gekennzeichnet, dass** im Schritt d) der Fokusdurchmesser des Laserstrahls (5) kontinuierlich bis zum Fokusdurchmesser beim anschließenden Schneidprozess vergrößert wird.

13. Verfahren nach einem der vorhergehenden Ansprüche, **dadurch gekennzeichnet, dass** vor dem Schritt a) die Werkstückoberseite (12) an der Einstichstelle eingeölt wird.

14. Laserbearbeitungsmaschine (1) umfassend einen Laserstrahlerzeuger (2), einen verfahrbaren Laserbearbeitungskopf (3) mit einer Prozessgasdüse (10), aus der der Laserstrahl (5) zusammen mit dem Prozessgas (7) austritt, eine Einrichtung (18) zum Auswählen des Prozessgases (7) und eine Steuerung (19), die programmiert ist, die Bewegung des Laserbearbeitungskopfes (3) und das ausgewählte Prozessgas (7) der Einrichtung (18) gemäß dem Verfahren nach einem der vorhergehenden Ansprüche zu steuern.

15. Computerprogrammprodukt, welches Codemittel aufweist, die zum Durchführen aller Schritte des Verfahrens nach einem der Ansprüche 1 bis 13 angepasst sind, wenn das Programm auf einer Steuerung (19) einer Laserbearbeitungsmaschine (1) abläuft.

## Claims

1. Method for piercing a metal workpiece (6) by means of a laser beam (5) and a process gas (7) comprising the following steps:
a) forming a pierced hole (11) in the workpiece (6) that does not go all the way through by piercing the workpiece (6) by means of the laser beam (5) using an inert gas, in particular nitrogen, as the process gas (7);
b) widening the upper part of the pierced hole (11) into a trough (14) that surrounds the pierced hole (11) on the top side (12) of the workpiece, in particular concentrically, by means of the laser beam (5) which is set to a larger beam diameter on the workpiece (6) than in step a) and using oxygen as the process gas (7); and
c) fully piercing the pierced hole (11) by means of the laser beam (5) and using oxygen as the process gas (7).

2. Method according to claim 1, **characterized in that** the focal point of the laser beam (5) in step a) lies above the top side (12) of the workpiece.

3. Method according to claim 1 or 2, **characterized in that** the focal point of the laser beam (5) in step b) is arranged further above the top side (12) of the workpiece than in step a).

4. Method according to any one of the preceding claims, **characterized in that** the focal point in step c) is arranged beneath the top side (12) of the workpiece.

5. Method according to any one of the preceding claims, **characterized in that** the focus diameter of the laser beam (5) in step b) is greater than in step a).

6. Method according to any one of the preceding claims, **characterized in that** the distance (d2) between a process gas nozzle (10) from which the process gas (7) emerges and the top side (12) of the workpiece in step b) is greater than the distance (d1) in step a).

7. Method according to any one of the preceding claims, **characterized in that** the distance (d3) between a process gas nozzle (10) from which the process gas (7) emerges and the top side (12) of the workpiece in step c) is smaller than the distance (d1, d2) in step a) and/or b).

8. Method according to any one of the preceding claims, **characterized in that** the pressure of the process gas (7) in step c) is smaller than in step a) and step b).

9. Method according to any one of the preceding claims, **characterized in that** steps a) to c) follow directly one another, the laser beam (5) remains continuously switched on and the change in beam diameter on the top side (12) of the workpiece takes place by moving the machining head (3) perpendicular to the top side (12) of the workpiece, wherein the change of the process gas (7) between step a) and step b) is carried out during movement of the machining head (3).

10. Method according to any one of the preceding claims, **characterized in that** in a further step d) the diameter of the pierced hole (11) is enlarged by irradiating with the laser beam (5) which is set to a larger focus diameter than in step c).

11. Method according to claim 10, **characterized in that** the focus diameter of the laser beam (5) is increased gradually several times.

12. Method according to claim 10, **characterized in that** in step d) the focus diameter of the laser beam (5) is continuously increased up to the focus diameter of the subsequent cutting process.

13. Method according to any one of the preceding claims, **characterized in that** before step a) the top side (12) of the workpiece is oiled at the piercing point.

14. Laser processing machine (1) comprising a laser beam generator (2), a movable laser machining head (3) with a process gas nozzle (10) from which the laser beam (5) emerges along with the process gas (7), a device (18) for selecting the process gas (7) and a control system (19) which is programmed to control the movement of the laser machining head (3) and the selected process gas (7) of the device (18) according to the method according to any one of the preceding claims.

15. Computer program product which comprises code means adapted to execute all steps of the method according to any one of the preceding claims 1 to 13 when the program runs on a control system (19) of a laser processing machine (1).

## Revendications

1. Procédé pour percer une pièce métallique (6) au moyen d'un faisceau laser (5) et d'un gaz de processus (7), comprenant les étapes suivantes :
a) formation d'un trou de perçage (11) non traversant dans la pièce (6) par perçage de la pièce (6) avec le faisceau laser (5) et un gaz inerte, en particulier de l'azote, en tant que gaz de processus (7) ;
b) élargissement de la partie supérieure du trou de perçage (11) pour former un creux (14) entourant, en particulier concentriquement, le trou de perçage (11) sur la face supérieure de la pièce (12), au moyen du faisceau laser (5) réglé sur un plus grand diamètre de faisceau qu'à l'étape a) sur la pièce (6) et avec de l'oxygène en tant que gaz de processus (7) ; et
(c) traversée du trou de perçage (11) au moyen du faisceau laser (5) et avec de l'oxygène en tant que gaz de processus (7).

2. Procédé selon la revendication 1, **caractérisé en ce que** le point de focalisation du faisceau laser (5) à l'étape a) se situe au-dessus de la face supérieure de la pièce (12).

3. Procédé selon la revendication 1 ou 2, **caractérisé en ce que** le point de focalisation du faisceau laser (5) à l'étape b) est disposé plus loin au-dessus de la face supérieure de la pièce (12) qu'à l'étape a).

4. Procédé selon l'une des revendications précédentes, **caractérisé en ce que** le point de focalisation à l'étape c) est disposé sous la face supérieure de la pièce (12).

5. Procédé selon l'une des revendications précédentes, **caractérisé en ce que** le diamètre de focalisation du faisceau laser (5) à l'étape b) est plus grand qu'à l'étape a).

6. Procédé selon l'une des revendications précédentes, **caractérisé en ce que** la distance (d2) entre une buse de gaz de processus (10), de laquelle sort le gaz de processus (7), et la face supérieure de la pièce (12) à l'étape b) est plus grande que la distance (d1) à l'étape a).

7. Procédé selon l'une des revendications précédentes, **caractérisé en ce que** la distance (d3) entre une buse de gaz de processus (10), de laquelle sort le gaz de processus (7), et la face supérieure de la pièce (12) à l'étape c) est plus petite que la distance (d1, d2) à l'étape a) et/ou b).

8. Procédé selon l'une des revendications précédentes, **caractérisé en ce qu'**à l'étape c), la pression du gaz de processus (7) est plus petite qu'à l'étape a) et à l'étape b).

9. Procédé selon l'une des revendications précédentes, **caractérisé en ce que** les étapes a) à c) se succèdent directement, le faisceau laser (5) reste continuellement allumé et la modification du diamètre de faisceau sur la face supérieure de la pièce (12) a lieu par déplacement de la tête d'usinage (3) perpendiculairement à la face supérieure de la pièce (12), le changement de gaz de processus (7) entre l'étape a) et l'étape b) ayant lieu pendant le déplacement de la tête d'usinage (3).

10. Procédé selon l'une des revendications précédentes, **caractérisé en ce que** dans une étape d) supplémentaire, le diamètre du trou de perçage (11) est agrandi par exposition au faisceau laser (5) réglé sur un plus grand diamètre de focalisation qu'à l'étape c).

11. Procédé selon la revendication 10, **caractérisé en ce que** le diamètre de focalisation du faisceau laser (5) est agrandi plusieurs fois de façon progressive.

12. Procédé selon la revendication 10, **caractérisé en ce que** à l'étape d), le diamètre de focalisation du faisceau laser (5) est agrandi de façon continue jusqu'au diamètre de focalisation lors du processus de coupe suivant.

13. Procédé selon l'une des revendications précédentes, **caractérisé en ce qu'**avant l'étape a), la face supérieure de la pièce (12) est huilée au point de perçage.

14. Machine d'usinage au laser (1), comprenant un générateur de faisceau laser (2), une tête d'usinage au laser (3) déplaçable dotée d'une buse de gaz de processus (10), de laquelle le faisceau laser (5) sort en même temps que le gaz de processus (7), un dispositif (18) pour sélectionner le gaz de processus (7) et une commande (19) qui est programmée pour commander le déplacement de la tête d'usinage au laser (3) et le gaz de processus (7) sélectionné du dispositif (18) conformément au procédé selon l'une des revendications précédentes.

15. Produit-programme informatique qui présente des moyens de codage qui sont adaptés pour exécuter toutes les étapes du procédé selon l'une des revendications 1 à 13 lorsque le programme se déroule sur une commande (19) d'une machine d'usinage au laser (1).
